# EUROPEAN PATENT APPLICATION

(11) **EP 1 231 433 A2**
(43) Date of publication of application: **14.08.2002**
(21) Application number: 00203500.4
(22) Date of filing: 09.10.2000
(51) Int. Cl.: F23G 1/00

(54) **Generation of energy from pyrolysis gas produced by reactors heated with their own flue gases**

(71) Applicant: Fumero Di Sabatino Ornella, 6513 Monte Carasso (CH); Brenière, David, 6514 Sementina (CH); Martignoni Bordonzotti, Daniela, 6835 Morbio Superiore (CH)
(72) Inventor: Fumero Di Sabatino, Ornella, 6513 Monte Carasso (CH); Brenière, David, 6514 Sementina (CH); Martignoni Bordonzotti, Daniela, 6835 Morbio Superiore (CH)
(74) Representative: Fiammenghi-Domenighetti, Delfina

(57) **Abstract**

A process for the generation of energy achieved by expanding burnt gas in the turbine of one or more turboalternators (2), this gas being pyrolysis gas produced in one or more pyrolysis reactors (3) in which solid wastes (10n) are subjected to a pyrolytic process providing thermal energy to the pyrolysis reactors (3) themselves is described. In the process in question the said thermal energy is wholly or partly recovered by bringing about heat exchange between the said one or more pyrolysis reactors (3) and the exhaust gases downstream from the said one or more turboalternators (2). The appended figure is to be published.

## Description

This invention relates to the field of electrical and/or thermal power generation, including the form of co-generation, obtained from the combustion of gases produced in a pyrolytic process performed in pyrolysis reactors in which biomass, fuel derived from wastes, solid wastes such as production waste, solid wastes, etc., are processed.

As those skilled in the art know, this process is achieved by heating the said solid wastes to high temperatures in the absence of oxygen, whereupon they are converted into gases and charcoal or the like.

While the latter can be used as a fuel or as an inert element, the gas produced can be delivered to internal combustion engines, e.g. gas turboalternators for the purposes of generating electrical energy.

The thermal energy of the exhaust gases which leave the turboalternators still at a high temperature has hitherto been partly recovered for the purposes of power co-generation. Given their abovementioned high temperature, it has occurred to the inventor of this invention that these could also be used for the purposes of heating the pyrolysis reactors which generated them, bringing about an appreciable overall energy efficiency in a pyrolysis plant.

To be able to assess the importance of this idea, it would be useful to provide a general description of the problems associated with the processes of energy generation and/or co-generation.

The co-generation of electricity, heat and/or steam through gas turbines, recovery boilers and, in some cases, steam turbines, is currently one of the most efficient, reliable and economic systems for producing electrical power and process heat. The co-generation systems and so-called "combined cycles" most commonly in use comprise plants including endothermic turbines (sometimes piston engines), heat recovery systems (such as steam boilers, drying systems, oil heat exchangers), and in some cases steam-driven turbomachines which can be used to convert part of the thermal energy contained in the boiler steam into electrical energy.

In the most common configuration of this type of plant the fuel used is derived from oil and in general is methane gas, LPG, gas oil or naphtha.

In the context of the production of pyrolysis gas for use for combustion purposes, the pyrolysis process, which is designed to produce vegetable charcoal and gases, is a process which has been implemented in a number of variants and with varying performance since the early 1800s, and provided the basic fuel during the period of the "industrial revolution" before being replaced by coal.

It should also be pointed out that nature has been carrying out the pyrolysis process for a very long time; one only has to consider the processes in the formation of petroleum, gas, coke, which constitute the basis of the fossil fuel reserves of our planet.

Pyrolysis is a technique which consists of applying high temperatures to a solid organic material (biomass, wastes, etc.) in the absence of air. The process of decomposition of some of the molecular bonds in various components of the material makes it possible to produce in the main combustible gaseous effluents, charcoal and condensable organic liquids.

For example, one type of biomass treated by a pyrolysis process on average produces approximately 27% of vegetable charcoal, 14% of oils and liquid wastes, and 59% of gas with a calorific value of approximately 15000 kJ/m³. It should also be pointed out that biomass provides 1/7th of the world's annual energy demand. The great diversity of plant species characteristic of the territory of our planet and the abundant biomass deriving from these constitute a major source of clean renewable energy.

Some systems developed during the last few years, particularly for large plants, which represent a starting point for this invention, are the so-called "IGCC" (Integrated Gasification Combined Cycles).

A limitation on these processes is always that the electricity and process heat production units are kept separate from the synthesis gas production unit.

In other words, the direct heat from the gas turbine exhaust is not used as a source of heat energy for the gas production cycle.

The specific subject matter of this patent lies in the combined and direct use of pyrolysis and electricity and steam co-generation through a combined cycle for the generation of electricity and heat together with normal utilisation of solid wastes or biomass.

The aim of developing such a thermal cycle is a result of present developments in the energy sector which is increasingly turning towards the use of renewable energy sources, voluntarily or through compulsion. This development is fundamentally governed by two main considerations:
- Fossil and nuclear energy sources are not inexhaustible, and in some sectors will have dried up completely within a few decades,
- The existence of the notorious greenhouse effect, with all its well-known effects on global climatic change, is now something which is recognised in all academic and political spheres. This effect is a direct consequence of the extensive use of fossil fuels (in particular petroleum in all its forms) as a primary energy source.

At the political level there is emerging awareness of this state of affairs: incentives for the use of renewable energy and disincentives in the form of taxes (e.g. "carbon tax", duties on fuels, etc.) are a clear expression of this.

To avoid the future energy crisis and in order to safeguard our climate one possible solution comprises going back to energies deriving from the solar energy received by our planet and other renewable sources. In this field we are testing:
1. Hydroelectric energy,
2. Direct solar energy (photovoltaic and solar panels),
3. Wind energy,
4. The energy which can be generated from biomass.

The limitations on the first three types of energy deriving from solar energy are above all of a geographical nature (the need to find mountainous places with the appropriate hydrology, windy places or places with good insolation), associated with sometimes very poor energy conversion efficiency and difficulties with storage of the energy produced.

If on the other hand we consider the energy produced by biomass, we find that this avoids these disadvantages in that at the same time it keeps the concentration of CO₂ in the atmosphere stable, or even reduces it. Clearly the latter consideration is only valid if the following rule is respected completely:
"for every unit of biomass which is consumed to produce heat it is necessary to create one or more replacements".

This means that if for example we burn a given surface area of woodland over a period of ten years, then an equal surface area must be wooded during the same period of time in order to return to the same starting conditions. Although it is virtually impossible to burn all the biomass produced (in the case of woods the leaves, the small branches and whatever else remains in the wood to form humus), it is obvious that in creating and burning biomass, in comparison with an equivalent cultivated surface area, the balance tilts in favour of an overall reduction in atmospheric CO₂ content.

Bearing in mind what has been said above, the inventor has had the idea to which this invention relates, which comprises a process for the generation of energy as described in the precharacterizing clause of appended claim 1, characterized by the characterizing part of the same claim.

Plant for carrying out the abovementioned process is also included in the scope of the invention.

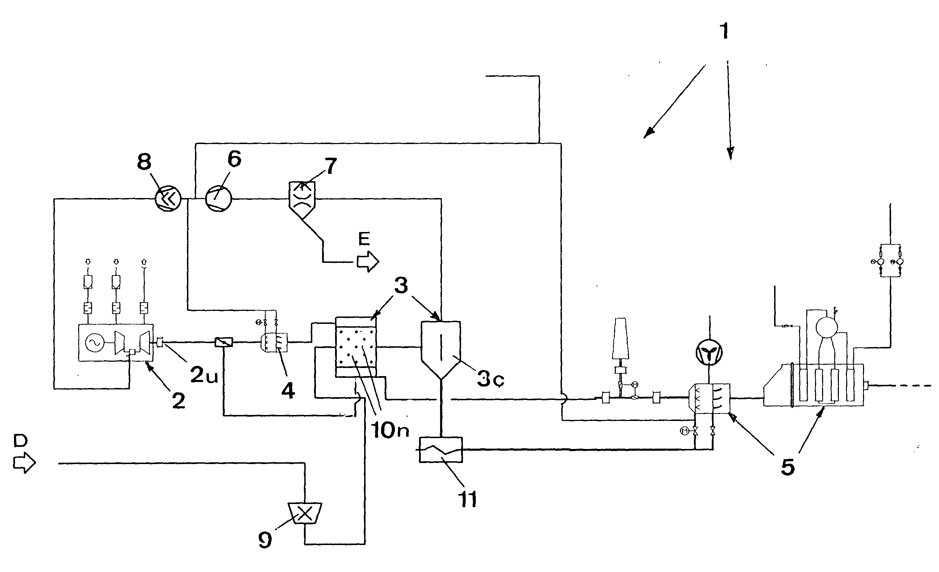

A description of the process according to the invention will now be provided, making reference to the appended figure which represents a functional diagram of a preferred embodiment of a plant for implementation of the process in question.

In the figure it is shown how in a plant 1 for implementing the process according to the invention a pyrolysis reactor 3 (shown in two parts for greater clarity of description, as will be seen below) houses within it solid wastes 10n, which are delivered to it continuously (arrow D) by means of systems of a known type, such as for example a hopper 9. These solid wastes 10n, when heated in the absence of oxygen, become converted as mentioned into gas, charcoal and a small proportion of ash.

While the latter is removed by means of suitable devices of a known type 11, the pyrolysis gas generated, which flows into a container 11 of pyrolysis reactor 3 is sent following filtration through a filter unit 7 and compressed in a first compression unit 6, partly to a gas turboalternator as fuel 2 and partly to a post-combustion unit 4 through which all or part of the exhaust gas from the exhaust 2u of turboalternator 2 flows towards pyrolysis reactor 3. It may prove advantageous to recompress only the part of the pyrolysis gas which is delivered to turboalternator 2, as indicated in the figure, through a second compression unit 8.

The temperature of the exhaust gases from turboalternator 2 can be optimally increased as necessary in the abovementioned closed-combustion unit 4.

The heavy oils and tars which are separated from abovementioned filter unit 7 can then be removed (arrow E) and possibly used for industrial applications, or "cracked" and included back in the combustion gas. On reaching pyrolysis reactor 3 the exhaust gas from turboalternator 2 and post-combustion unit 4 gives up the energy necessary for performing the process of pyrolysis of the solid wastes 10n contained within it, through heat exchange (which can take place for example through the walls of a reactor jacket).

Because the fuel exhaust gases which reach pyrolysis reactor 3 only give up a limited portion of their thermal energy to it, the inventor has provided that at least part of their thermal energy should be recovered by sending them to a boiler 5, used for the purposes of heating and/or vaporising a fluid (for example water).

Both the charcoal extracted from pyrolysis reactor 3, as mentioned, and any excess pyrolysis gas can be burnt in that boiler (or another separate boiler) in order to permit further energy recovery.

It is obvious that only one pyrolysis reactor 3, only one turboalternator 2, only one boiler 5, etc., have been illustrated in the example described, but all the component parts of the plant may be present in a number greater than one depending upon the power which has to be produced and other design data.

What is described above in fact comprises a thermodynamic and mass cycle which is independent of the envisaged power and size of the components. The appended claims also make reference to a universal plant cycle, independently of the size, power, fuel and characteristics of the individual components.

By way of example mass and energy flows relating to a hypothetical hourly throughput of solid material, in this case biomass, for pyrolysis, and the resulting electrical power provided by the combination of the gas turbine and the steam turbine, will now be illustrated by way of example.

With reference to the appended drawing, the following assumptions are made:

The consumption of biomass fuel entering hopper 9 is 5600 kg/hour. Through pyrolysis approximately 4340 nm³/hour of untreated gas is obtained and delivered to the treatment system.

At the outlet from this we have dried and "detarred" gas which is capable of being compressed in compressor 6 and burnt in turboalternator 2 in a quantity corresponding to approximately 3100 nm³/hour.

This quantity corresponds to a turbine fuel power of 12500 kW.

Net power of 3500 kw at the alternator terminals (gas turbine efficiency = 28%) is obtained from gas turboalternator 2. It is assumed that the pyrolysis gases will not be used for post-combustion in the boiler.

The thermal power from the turboalternator in the form of exhaust gas heat is approximately 9000 kW.

Of this power approximately 2400 kW is necessary to supply pyrolysis reactor 3, in order to produce 3100 nm³/hour of the abovementioned gases.

The remaining thermal power of the turbine exhaust leaving the outer jacket of the pyrolysis reactor feeds boiler 5 as combustion air for the system.

Following the pyrolysis process approximately 1260 kg/h of charcoal are collected (5600 of biomass less 4340 of untreated gas). This charcoal, which has an overall calorific value of 9500 kW, is burnt in the system feeding steam boiler 5.

It is assumed here that the heat input from post-combustion unit 4 upstream from the pyrolysis reactor is zero.

In all an overall thermal capacity of 16100 kW (9000 - 2400 + 9500) flows to boiler 5.

Considering a boiler cycle with a steam turbine it is found that assuming 85% efficiency in boiler 5 and 28% for the steam turbine, the power at the steam turbine terminals is approximately 3850 kW.

Taking a general energy balance it is therefore found that:

The total input of energy from biomass (assuming an average biomass calorific value of 13500 kJ/kg) is 21000 kW.

The gross power measured at the terminals of the alternators from the two turbines is 7350 kW.

The efficiency of the cycle, including internal consumption, is therefore 35.0%.

This certainly represents an extremely positive result when it is considered that conventional biomass combustion processes on a hearth or fluidised bed only yield maximum efficiencies of around 22%.

This invention represents a major innovation in the concept of the co-generation of electricity and heat jointly with the disposal of wastes of all kinds, from biomass to solid urban wastes, to industrial wastes.

What the inventor has attempted to optimise and use with maximum efficiency is the heat normally available from gas turbines, which as a result of their temperature and throughput characteristics are very well suited to supply energy to the pyrolysis reactor.

Another fundamental aspect of this invention is undoubtedly combination of the part producing fuel, whether pyrolysis gas or resulting charcoal, with immediate utilisation in the process.

## Claims

1. Process for the generation of energy achieved by expanding burnt gas in the turbine of one or more turboalternators (2), this gas being pyrolysis gas produced in one or more pyrolysis reactors (3) in which solid wastes (10n) are subjected to a pyrolysis process providing thermal energy to the pyrolysis reactors (3) themselves, **characterized in that** the said thermal energy is obtained wholly or partly by heat exchange between the said one or more pyrolysis reactors (3) and the exhaust gases discharged from the said one or more turboalternators (2).

2. Process according to claim 1, in which part of the pyrolysis gas produced by the said one or more pyrolysis reactors is passed to a post-combustion unit (4) through which at least part of the exhaust gas from the said turboalternators (2) passes when travelling from the latter to the said pyrolysis reactors (3).

3. Process according to either of the foregoing claims, in which the said exhaust gases, after having exchanged heat with a pyrolysis reactor (3), are delivered to one or more boilers (5) in which their residual heat can be recovered in order to heat and/or vaporise a fluid.

4. Process according to claim 3, in which the said fluid is vaporised, causing it to drive a turbine for the generation of electricity.

5. Process according to claim 3, in which the said fluid is heated and then delivered to a heating or distance heating system.

6. Plant (1) for generating energy comprising one or more turboalternators (2) driven by the expansion of burnt gas, this gas being produced in one or more pyrolysis reactors (3) in which solid wastes (10n) are subjected to a pyrolytic process providing heat energy to the pyrolysis reactors (3) themselves, **characterized in that** the outlet (2u) for the exhaust gases from the said turboalternators (2) is connected to the said pyrolysis reactors (3) and the latter are constructed in such a way as to use at least part of the thermal energy in the said exhaust gases in order to perform the aforesaid pyrolytic process.

7. Plant according to claim 1, in which one or more post-combustion units (4) to which some of the said pyrolysis gas is delivered, are inserted between the said one or more pyrolysis reactors (3) and the pipe or pipes which deliver the turboalternator (2) exhaust gas, only the remaining part being sent to the abovementioned turboalternators (2).

8. Plant according to one of the foregoing claims, also provided with one or more boilers (5) to which the said exhaust gases are delivered after they have passed through the pyrolysis reactors (3) in such a way that at least part of their residual thermal energy can be recovered in order to heat and/or vaporise a fluid.

9. Plant according to any one of the foregoing claims, in which one or more compression units (6, 8) and a filtering unit (7) which respectively filter and compress the pyrolysis gas delivered to the said turboalternators (2) and the said post-combustion units (4) are inserted downstream from the pyrolysis reactor or reactors (3).
